# EUROPÄISCHE PATENTSCHRIFT

(11) **EP 0 404 791 B1**
(45) Veröffentlichungstag und Bekanntmachung des Hinweises auf die Patenterteilung: **05.05.1993**
(21) Anmeldenummer: 89903105.8
(22) Anmeldetag: 09.03.1989
(51) Int. Cl.: G03B 21/48

(54) **STEUER- UND REGELEINRICHTUNG FÜR DEN FILMTRANSPORT EINES FILMPROJEKTORS**
DEVICE FOR CONTROLLING AND ADJUSTING FILM-STRIP FEED IN A FILM PROJECTOR
AGENCEMENT DE COMMANDE ET DE REGLAGE DE L'AVANCEMENT DU FILM DANS UN PROJECTEUR DE CINEMA

(30) Priorität: 11.03.1988 DE 3808107; 11.03.1988 DE 3808044
(43) Veröffentlichungstag der Anmeldung: 02.01.1991
(73) Patentinhaber: ARNOLD & RICHTER CINE TECHNIK GMBH & CO. BETRIEBS KG., D-80799 München (DE); ARRI CINE & VIDEO GERÄTE GESELLSCHAFT M.B.H., A-1150 Wien (AT)
(72) Erfinder: BLASCHEK, Otto, D-8011 Aschheim (DE); TSCHIDA, Ernst, A-1130 Wien (AT); HAAS, Josef, A-1210 Wien (AT); POPP, Thomas, D-8000 München (DE)
(74) Vertreter: Maikowski, Michael, Dipl.-Ing. Dr.
(86) Internationale Anmeldenummer: DE8900158
(87) Internationale Veröffentlichungsnummer: WO8908867

(56) Entgegenhaltungen:
- DE-A- 2 347 411
- DE-A- 2 738 322
- DE-A- 2 822 392
- US-A- 3 642 357

## Beschreibung

Die Erfindung betrifft eine Steuer- und Regeleinrichtung für den Filmtransport eines Filmprojektors nach dem Oberbegriff des Anspruchs 1.

Eine Steuereinrichtung für den Filmtransport eines Filmprojektors der im Oberbegriff des Anspruchs 1 genannten Art ist aus der DE-PS 27 38 322 bekannt. Der bekannte Filmprojektor weist je eine von einem eigenen Spulenmotor antreibbare Filmspule auf beiden Seiten des Bildfensters, zwei getrennt voneinander angetriebene Reibrollenpaare zwischen den Filmspulen und dem Bildfenster zum Erzeugen von Filmschleifen auf beiden Seiten des Bildfensters und eine Filmtransporteinrichtung zwischen beiden Reibrollenpaaren zum intermittierenden Transport des Films durch das Bildfenster auf.

Die Steuereinrichtung enthält je eine Schleifenmeßeinrichtung zwischen jedem Reibrollenpaar und dem Bildfenster sowie eine Reibrollen-Steuerschaltung, die von der ihr zugeordneten Schleifenmeßeinrichtung ein Meßsignal erhält und an den Antriebsmotor des zugeordneten Reibrollenpaares ein Ausgangssignal zur Einhaltung einer konstanten Filmschleifengröße abgibt. Zusätzlich ist eine Schaltung vorgesehen, die ein der Bildwechselfrequenz entsprechendes Signal an die Filmtransporteinrichtung und an die Reibrollen-Steuerschaltungen abgibt, um einen Betrieb mit in weiten Bereichen veränderlicher, vorgebbarer Bildwechselfrequenz unter Aufrechterhaltung von konstanten Filmschleifengrößen beiderseits des Bildfensters zu ermöglichen. Außerdem wird ein von dem Ausgangssignal der Reibrollen-Steuerschaltungen abgeleitetes Signal den Steuerschaltungen für die Spulenmotoren zugeführt, um eine konstante Filmspannung zwischen den Reibrollen und den Filmspulen herzustellen.

Die Steuerschaltungen für die Antriebsmotoren der Vor- und Nachwickeleinrichtungen und für die Spulenmotoren sowie die Schleifensensoren sind so miteinander gekoppelt, daß der Film von der Vorratsspule unter Einhaltung konstanter Filmschleifen und mit im wesentlichen konstantem Zug abgewickelt und auf die Aufwickelspule aufgewickelt wird. Voraussetzung hierfür ist allerdings, daß der Film in exakt festgelegter Weise in den Filmkanal eingelegt und auf den Wickeltellern positioniert wird, sodaß beim Transport des Films in der einen oder anderen Richtung ein korrektes Auf- und Abwickeln des Films erfolgt und der Film nicht infolge falsch aufgelegter Filmspulen beschädigt oder zerrissen wird.

Zum schnellen Umspulen von Spule zu Spule weist die bekannte Steuereinrichtung eine Schnelltransport-Steuerung mit dynamischer Bremsung auf, die nur bei einem reinen Umspulvorgang wirksam ist, während bei einem vollständigen Abwickeln des Films von einem Wickelteller beide Wickelteller weiter angetrieben werden, sodaß das aus der Filmspule herausragende freie Filmende gegen die an der Peripherie des betreffenden Wickeltellers angeordneten Einrichtungen des Filmprojektors schlägt.

Ein wirksamer Auslaufstopp sowohl beim intermittierenden Transport des Films als auch beim kontinuierlichen Transport des Films zum Suchlauf bzw. zum schnellen Umspulen erhöht jedoch nicht nur den Bedienungskomfort sondern ist zum Teil auch Voraussetzung für die Einrichtung einer Fernbedienung und für die Verwendung eines derartigen Filmprojektors zur Bildnachbearbeitung.

Da die bekannte Steuereinrichtung zudem getrennte Antriebe für die Reibrollenpaare sowie getrennte Meßeinrichtungen für die rechts und links vom Bildfenster gebildeten Filmschleifen und dadurch bedingt getrennte Reibrollen-Steuerschaltungen enthält, ist sie verhältnismäßig aufwendig und darüberhinaus nicht in der Lage, zum schnellen Bildtransport vom intermittierenden Filmtransport auf einen kontinuierlichen Filmtransport umzuschalten.

Aus der DE-A-2 822 392 ist ein Laufbildprojektor mit einer Einrichtung zum Umkehren der Filmtransportrichtung bekannt, der zwei Wickelmotoren und eine Steuer- und Regeleinrichtung aufweist, mit der die beiden Wickelmotoren so angesteuert werden, daß bei einem gegenläufigen Antrieb ein langsames, filmschonendes Wegziehen bestehender Filmschleifen erfolgt. Beim Straffen des Films wird an beiden Wickeln auf einen schnelleren Wickelbetrieb mit gleichgerichtetem Antrieb und weichem, filmschonendem Hochlauf auf die Wickelgeschwindigkeit umgeschaltet.

Aus der US-A-3 642 357 ist ein Projektor mit zwei auf beiden Seiten eines Bildfensters angeordneten Wickeltellern bekannt, wobei zwischen dem Bildfenster und den Wickeltellern Vor- und Nachwickeleinrichtungen zum Erzeugen von Filmschleifen auf beiden Seiten des Bildfensters vorgesehen sind. Der intermittierende Filmtransport erfolgt mittels einer Filmzahnrolle, die von einem mit der Blende des Projektors gekoppelten Hauptmotor über ein Malteserkreuz-Getriebe angetrieben wird. Die Vor- und Nachwickeleinrichtungen sind über Riemenantriebe miteinander und mit dem Hauptmotor verbunden, so daß eine feste Zuordnung zwischen Filmtransport und Vor- und Nachwickeleinrichtung geschaffen wird, die nur eine mechanische Einstellung, nicht aber eine getrennte Regelung des Filmtransports und der Vor- und Nachwickeleinrichtungen zuläßt.

Aus der DE-A-2 347 411 ist eine Filmtransportvorrichtung bekannt, die eine Filmvorratsspule, eine Filmaufnahmespule und ein zwischen beiden Spulen angeordnetes Filmtransport-Zahnrad aufweist, das zur Führung des Films durch ein Filmfenster dient. Zwischen der Filmvorratsspule und der Filmaufnahmespule und dem Bildfenster sind Führungen angeordnet, die dazu dienen, eine Filmschleife zu beiden Seiten des Filmfensters auszubilden. Ein Impulsgenerator dient zur Erzeugung einer Folge von Motorantriebssignalen für den Antrieb des Filmtransport-Zahnrades, wobei jeder Filmtransportschritt in einen vorgegebenen Winkelschritt und einen Stellungskorrekturschritt unterteilt wird. Ein optoelektrischer Sensor dient dazu, die jeweilige Stellung des Motor während eines Transportschrittes zu erfassen und als Istsignal an die Steuer-und Regeleinrichtung für den Antrieb des Filmtransport-Zahnrades abzugeben.

Der vorliegenden Erfindung liegt die Aufgabe zugrunde, eine Steuer- und Regeleinrichtung für den Filmtransport eines Filmprojektors der im Oberbegriff des Anspruchs 1 genannten Art zu schaffen, die eine einfache Steuerung und Regelung der einzelnen Filmantriebe sowie einen direkten Übergang vom intermittierenden Bildtransport mit jeder möglichen Bilddarstellungsfrequenz auf einen kontinuierlichen Schnellauf und umgekehrt ermöglicht und die Voraussetzungen für ein beliebiges Auflegen des Films auf die Wickelteller schafft und einen wirksamen Auslaufstop des Films sowohl beim intermittierenden Filmtransport als auch beim schnellen Umspulen oder Suchlauf ermöglicht.

Diese Aufgabe wird durch das kennzeichnende Merkmal des Anspruchs 1 gelöst.

Die erfindungsgemäße Lösung ermöglicht durch die Anordnung nur eines gemeinsamen Motors für die Vor- und Nachwickeleinrichtung eine vereinfachte Steuerung und Regelung der Filmantriebe sowohl im intermittierenden, nach einem bestimmten Transportprofil durchzuführenden Filmtransport mit einer frei wählbaren Bildfrequenz als auch beim kontinuierlichen Filmtransport zum schnellen Vor-, Rück- und Suchlauf und gestattet ein beliebiges Auflegen des Films auf die Wickelteller, so daß wahlweise ein Innen- oder Außenwickel erfolgen kann.

Auf diese Weise wird der Bedienungskomfort wesentlich erhöht und die Voraussetzung für eine bedienungsfreundliche Fernbedienung und Bildnachbearbeitung geschaffen.

Die Übergangsphase, in der eine Änderung der Projektionsgeschwindigkeit und Winkelgeschwindigkeit erfolgt, bewirkt ein schnelles, aber kontinuierliches Verändern der Drehzahl der Vor- und Nachwickeleinrichtung und damit der Filmgeschwindigkeit. Dadurch wird auch in den Übergangsphasen eine korrekte Filmspannung an den Filmspulen bzw. Wickeltellern sichergestellt. Durch die Koppelung der beiden Vor- und Nachwickeleinrichtungen ist nur ein Antriebsmotor für die Vor und Nachwickeleinrichtungen sowie eine Schleifenmeßeinrichtung und eine Steuer- und Regelungseinrichtung für die Vor- und Nachwikkeleinrichtungen erforderlich.

Insgesamt wird damit eine Schnellspuleinrichtung für den Filmtransport eines Filmprojektors geschaffen, die sich durch einen geringen Aufwand und hohen Bediennungskomfort auszeichnet, wobei durch die Bedienungsperson durch Betätigen nur einer Bedienungstaste unmittelbar von jeder Bildprojektionsgeschwindigkeit auf Schnellauf, das heißt von schrittweisem Bildtransport sofort auf kontinuierlichen Bildtransport und zurück auf die gewünschte Bildprojektionsfrequenz umgeschaltet werden kann. Dabei werden vom übergeordneten Steuer-, Regel- und Überwachungssystem erforderliche Übergangsphasen automatisch eingefügt.

Bei der erfindungsgemäßen Lösung sind zur Entkopplung der an den auf den Wickeltellern aufliegenden Filmspulen von der schrittförmigen Filmvorschubbewegung im Bereich des Bildfensters auf beiden Seiten des Bildfensters Filmvorratsschleifen vorgesehen, die über zwei Zahntrommeln der Vor- und Nachwickeleinrichtungen geführt und gehalten werden, wobei der Antrieb der Vor- und Nachwickeleinrichtungen über Riemen von einem gemeinsamen Gleichstrommotor erfolgt, dessen Drehzahl proportional zur eingestellten Bildfrequenz geregelt wird.

Die einmal eingestellten Schleifen bleiben dabei im wesentlichen erhalten, wobei auftretende Abweichungen von einer Schleifenmeßeinrichtung in Form einer Reflexionslichtschranke erfaßt und dem Antriebsregler für den gemeinsamen Gleichstrommotor zugeführt werden. Durch die Kopplung der beiden Vor- und Nachwickel-Zahntrommeln ist nur ein Antriebsmotor, eine Schleifenmeßeinrichtung und eine Antriebsregeleinrichtung erforderlich.

Zur Bildfrequenzumschaltung wird von einem übergeordneten Steuer-, Regel- und Überwachungssystem eine Übergangsphase eingefügt, die ein rasches, aber kontinuierliches Verändern der Drehzahl der Vor- und Nachwickeleinrichtung und damit der Filmgeschwindigkeit bewirkt. Damit und durch Aufschalten eines dem Wickeldurchmesser angepaßten zusätzlichen Beschleunigungsmomentes wird auch in den Übergangsphasen eine korrekte Filmspannung an den Filmspulen sichergestellt. Die Filmschleifenregelung wird während dieser Übergangsphase an die Filmtransporteinrichtung abgegeben, die in Abhängigkeit vom Ausgangssignal der Schleifenmeßeinrichtung Bildtransportschritte hinzufügt oder ausläßt.

Gemäß einer vorteilhaften Weiterbildung der Erfindung wird beim kontinuierlichen Filmtransport an die Filmtransporteinrichtung eine proportional zur Drehzahl der Vor- und Nachwickeleinrichtung verlaufende Vorspannung angelegt und der Vorspannung eine Regelspannung überlagert, deren Vorzeichen vom Ausgangssignal der Schleifenmeßeinrichtung abhängt.

Da bei der Steuerung des Auslaufstops die Bestimmung des Durchmessers der Filmspulen auf den Auf- und Abwickelspulen über die Drehzahl der einzelnen Antriebsmotore für die Vor- und Nachwickeleinrichtungen bzw. die Wickeleinrichtungen erfolgt, ist eine äußerst schnelle kontrollierte Abbremsung sämtlicher Antriebsmotoren möglich und mit geringem Aufwand kann beispielsweise sichergestellt werden, daß der Film von der Abwickelspule nicht vollständig abgewickelt wird sondern eine Restlänge auf der Abwickelspule verbleibt, was insbesondere bei der Bildnachbearbeitung von Bedeutung ist.

Eine vorteilhafte Weiterbildung der Erfindung ist dadurch gekennzeichnet, daß bei einem gemeinsamen Antriebsmotor für die in entgegengesetzten Drehrichtungen betriebenen Vor- und Nachwickeleinrichtungen dieser mit einer die Drehzahl erfassenden Sensoreinrichtung verbunden ist, deren Ausgangssignal zusammen mit den Ausgangssignalen der mit den Wickelmotoren verbundenen Sensoreinrichtungen einer Vergleichseinrichtung zugeführt wird, die bei Überschreiten eines vorgebbaren Wertes der Drehzahldifferenz zwischen dem Antriebsmotor der Vor- und Nachwickeleinrichtungen und einem der Wickelmotoren ein Signal an die übergeordnete Steuereinrichtung abgibt, die sämtliche Antriebsmotore abbremst.

Diese Weiterbildung ermöglicht mit geringem schaltungstechnischem Aufwand einen wirksamen Drehzahlvergleich zwischen den Antriebsmotoren der Vor- und Nachwickeleinrichtungen und der Wickeleinrichtungen für die Wickelteller.

In einer weiteren vorteilhaften Ausgestaltung der Erfindung sind ein übergeordnetes, mikroprozessorgesteuertes Steuer-, Regel- und Überwachungssystem sowie elektronische Steuer- und Regelteile zur Steuerung der Einzelkomponenten des Filmprojektors vorgesehen, wobei der Mikroprozessor mit sämtlichen Ausgangssignalen der Sensoreinrichtungen beaufschlagt ist und bei Überschreiten einer vorgebbaren Drehzahl und z.B. oder bei einer Abweichung einer Drehrichtung von der dem jeweiligen Antriebsmotor vorgegebenen Drehrichtung sämtliche Antriebsmotoren stillsetzt. Durch diesen Aufbau der Steuer- und Regeleinrichtung wird ein minimaler schaltungstechnischer Aufwand bei größter Dynamik der einzelnen Regelkreise und größtmöglicher Sicherheit gegen Fehlfunktionen erreicht.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1: eine schematische perspektivische Darstellung der einzelnen Filmtransportteile;
- Figur 2: eine Draufsicht auf einen Filmprojektor mit zu beiden Seiten des Bildfensters gebildeten Filmschleifen;
- Figur 3: ein vereinfachtes Blockschaltbild der Steuer- und Regeleinrichtung für den Filmprojektor und
- Figur 4: ein Schaltbild der Vergleichseinrichtung.

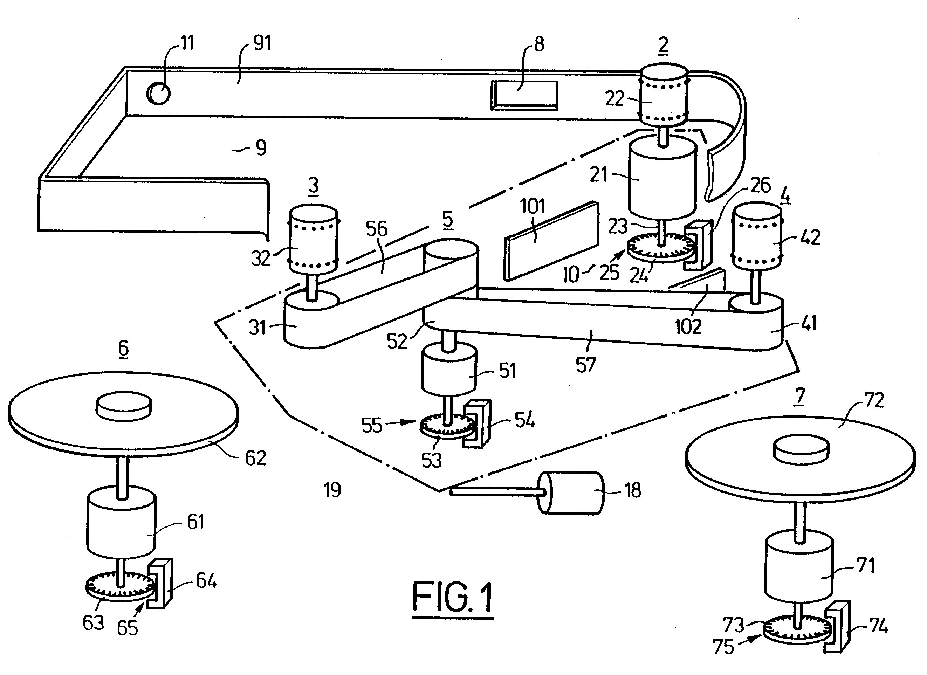

Die in Figur 1 dargestellte schematische perspektivische Ansicht der wesentlichen Antriebsteile des erfindungsgemäßen Filmprojektors zeigt die Filmtransporteinrichtung 2, die Vor- und Nachwickeleinrichtungen 3, 4, die von einer gemeinsamen Antriebseinrichtung 5 angetrieben werden, die die Filmspulen tragenden Wickeleinrichtungen 6, 7 sowie in vereinfachter schematischer perspektivischer Darstellung die zur Aufnahme der Filmschleifen zu beiden Seiten des Bildfensters 8 dienenden Filmschleifenkanäle 9, 10.

Die Filmtransporteinrichtung 2 enhält einen Hauptmotor 21, der aus einem hochdynamischen Gleichstromservomotor besteht, der seine Drehbewegung über eine direkt angetriebene Filmzahnrolle 22 auf den Film 1 überträgt. Über eine Welle 23 ist der Hauptmotor 21 fest mit einer Winkelgeberscheibe 24 eines Sensors 26 verbunden, der mittels einer opto-elektronischen Positions-Abtasteinrichtung 25 die exakte Stellung des Hauptmotors 21 erfaßt und weiterleitet.

Die Vor- und Nachwickeleinrichtungen 3, 4 enthalten eine Antriebswelle 31, 41, die fest mit je einer Zahntrommel 32, 42 verbunden sind und den eingelegten Film kontinuierlich transportieren. Die Antriebswellen 31, 41 sind über Riemen 56, 57 mit Antriebsrollen 52 der Antriebseinrichtung 5 verbunden, die über eine Welle starr mit einem Antriebsmotor 51 gekoppelt ist, der aus einem geregelten Gleichstrommotor besteht, dessen Drehzahl proportional zur eingestellten Bildfrequenz geregelt wird. Zur Drehzahl- und Positionserfassung des Antriebsmotors 51 dient eine fest mit der Motorwelle verbundene Winkelgeberscheibe 53, die zusammen mit einem Sensor 54 eine Positions - Abtasteinrichtung 55 bildet.

Die Wickeleinrichtungen 6, 7 zur Aufnahme der Filmspulen enthalten einen Wickelteller 62, 72, die über eine Welle mit je einem Wickelmotor 61, 71 verbunden sind, der als Gleichstrommotor ausgebildet ist. Zur Drehzahl- und Drehrichtungserfassung der Wickelmotoren 61, 71 dient eine fest mit der Welle des jeweiligen Wickelmotors 61, 71 verbundene Winkelgeberscheibe 63, 73, die zusammen mit einer optoelektronischen Abtasteinrichtung 64, 74 eine Sensoreinrichtung 65, 75 bildet.

Die Filmschleifenkanäle 9, 10 dienen zur Aufnahme der zu beiden Seiten des Bildfensters 8 gebildeten Filmschleifen, wobei im vorliegenden Fall aufgrund der speziellen Ausgestaltung der Steuer-und Regeleinrichtung und der mechanischen Koppelung nur eine Schleifenmeßeinrichtung 11 in dem links vom Bildfenster 8 angeordneten Filmschleifenkanal 9 vorgesehen ist. Die Schleifenmeßeinrichtung 11 kann aus einer Reflexionslichtschranke oder einer Leuchtdiode in Verbindung mit einem gegenüberliegenden Fototransistor bestehen.

Ein in entsprechenden Führungen gelagerter Zustellschlitten 19 wird von einem Zustellmotor 18 angetrieben und trägt die Abbildungsoptik, die Filmtransporteinrichtung 2 einschließlich einer Filmbühne mit Filmandrückplatte, die Vor- und Nachwickeleinrichtungen 3, 4, die Schwenkkufe 33 sowie die Antriebseinrichtung 5.

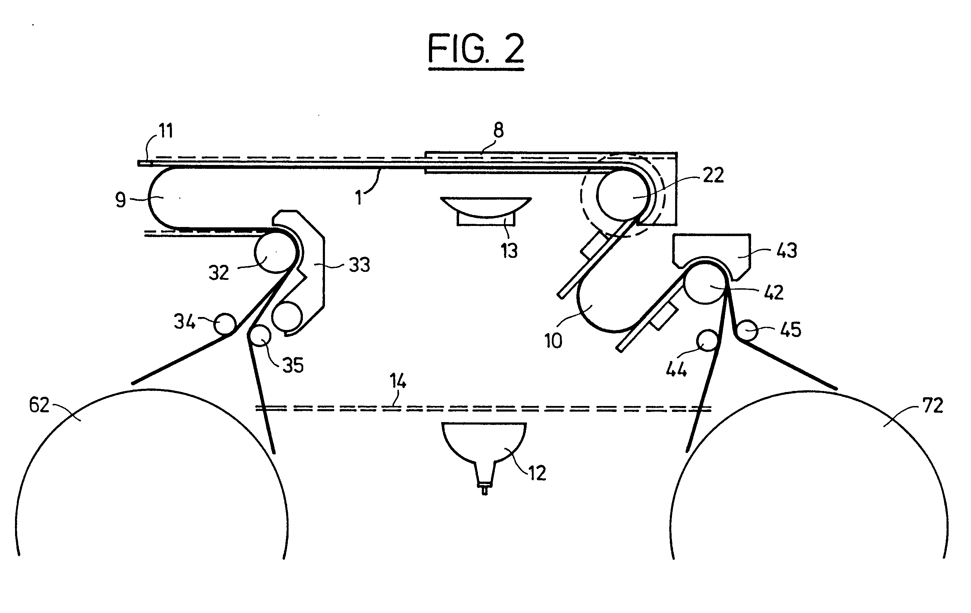

Die in Fig. 2 dargestellte Draufsicht auf einen Filmprojektor veranschaulicht den Filmtransportweg, die Anordnung der Einzelteile des Filmkanals und der Antriebsteile, sowie die Bildung der Filmschleifen in den Filmschleifenkanälen, wobei die Teile, die mit der Darstellung gemäß Figur 1 übereinstimmen mit gleichen Bezugsziffern wie in der perspektivischen Darstellung gemäß Figur 1 bezeichnet sind.

Gleichzeitig verdeutlicht die Draufsicht die unterschiedlichen Wickelrichtungen der Wickelteller 62, 72, wobei der sogenannte Außenwickel in durchgezogener Linie dargestellt ist, während der sogenannte Innenwickel gestrichelt dargestellt ist.

Die Wickelteller 62, 72 dienen zur Aufnahme der Filmspulen, wobei der Film wahlweise vom linken Wickelteller 62 abgewickelt und durch den nachstehend beschriebenen Filmkanal zum rechten Wickelteller 72 oder umgekehrt bewegt werden kann. Nach Wahl des Benutzers kann der Film 1 auch in beliebiger Weise auf die Wickelteller 62, 72 aufgelegt werden, was in Figur 2 durch die unterschiedlichen Filmbahnen angedeutet ist.

An den linken Wickelteller 62 schließen sich zwei Umlenkstifte 34, 35 an, die den Film 1 zwischen die Zahntrommel 32 der linken Vor- und Nachwickeleinrichtung 3 und eine Schwenkkufe 33 führen. In gleicher Weise sind zwei Umlenkstifte 44, 45 in der Nähe des rechen Wickeltellers 72 angeordnet, die den Film zwischen die Zahntrommel 42 der rechten Vor- und Nachwickeleinrichtung und eine Andrückkufe 43 leiten. Die Schwenkkufe 33 und die Andrückkufe 43 weisen Innenflächen auf, die in ihrer Krümmung dem Durchmesser der Zahntrommeln 32, 42 angepaßt sind, so daß der Film 1 im eingespannten Zustand eng an der jeweiligen Zahntrommel 32, 42 anliegt.

Zwischen den Vor- und Nachwickeleinrichtungen 3, 4 ist das Bildfenster 8 und die Filmtransporteinrichtung 2 mit der Filmzahnrolle 22 angeordnet. Das Bildfenster 8 ist Teil einer Filmanlegeschiene 80, die im Bereich der Filmzahnrolle 22 eine gebogene Filmkufe 81 aufweist, deren Krümmung ebenfalls dem Durchmesser der Filmzahnrolle 22 angepaßt ist.

Eine federnd in einer Filmbühne gelagerte Andrückbühne 85 greift zwischen die Zähne der Filmzahnrolle 22 und liegt im geschlossenen Zustand des Filmkanals eng am Film 1 an und drückt diesen gegen die Filmanlegeschiene 80, so daß der Film ohne seitliche Auslenkungen am Bildfenster 8 vorbeiläuft und ein geschlossener Übergang zur Filmzahnrolle 22 gewährleistet ist.

Zwischen der linken Zahntrommel 32 und dem Bildfenster 8 ist ein linker Filmschleifenkanal 9 vorgesehen, der durch parallele Kanalwände 91, 92 gebildet wird. In gleicher Weise ist zwischen der Filmtransporteinrichtung 2 bzw. der Filmzahnrolle 22 und der rechten Zahntrommel 42 ein rechter Filmschleifenkanal 10 ausgebildet, der durch zwei parallele Kanalwände 101, 102 gebildet wird, die an der Filmzahnrolle 22 bzw. der rechten Zahntrommel 42 anliegen.

Als Lichtquelle dient eine Projektionsleuchte 12, mit der in Verbindung mit einer optischen Einrichtung 13 das jeweilige, vor dem Bildfenster 8 stehende Bild auf eine Rückprojektionshaube oder bei Großbilddarstellungen auf eine Leinwand abgebildet wird. Zwischen der Projektionsleuchte 12 und der optischen Einrichtung 13 ist eine rotierende Blendenscheibe bzw. ein rotierender Blendenspiegel 14 vorgesehen.

Die Filmtransporteinrichtung 2, die Filmandrückplatte 85, die Vor- und Nachwickeleinrichtungen 3, 4 sowie die Filmschleifen-Kanalwände 101, 102 sind gemeinsam zusammen mit der Abbildungsoptik 13 auf einem Zustellschlitten 19 angeordnet, der mittels des in Figur 1 dargestellten Zustellmotors 18 zum Schließen des Filmkanals bewegt wird.

Der vom linken Wickelteller 62 abgewickelte oder aufgewikkelte Film 1 wird an dem einen oder anderen Umlenkstift 34, 35 vorbei zur linken Zahntrommel 32 der Vor- und Nachwickeleinrichtung 3 geführt, wo er mittels einer Schwenkkufe 33 an die Zahntrommel 32 angedrückt wird. Anschließend gelangt der Film 1 in den links vom Bildfenster 8 gelegenen Filmschleifenkanal 9 und von dort am Bildfenster 8 vorbei zur Filmzahnrolle 22 der Filmtransporteinrichtung.

Zwischen der Filmzahnrolle 22 der Filmtransporteinrichtung 2 und der Zahntrommel 42 der nachfolgenden Vor- und Nachwickeleinrichtung 4 ist der rechts vom Bildfenster 8 angeordnete Filmschleifenkanal 10 vorgesehen, der im Schrittschaltbetrieb die schrittförmige Filmvorschubbewegung im Bereich des Bildfensters von der kontinuierlichen Filmbewegung der Vor- und Nachwickeleinrichtung 4 entkoppelt. Zur Anlage des Films 1 an die Zahntrommel 42 der Vor- und Nachwickeleinrichtung 4 dient eine Andrückkufe 43, an die sich die Zahntrommel 42 beim Schließen des Filmkanals anlegt.

An dem einen oder anderen Umlenkstift 44, 45 vorbei gelangt der Film auf den rechten Wickelteller 72 der entsprechenden Wickeleinrichtung 7.

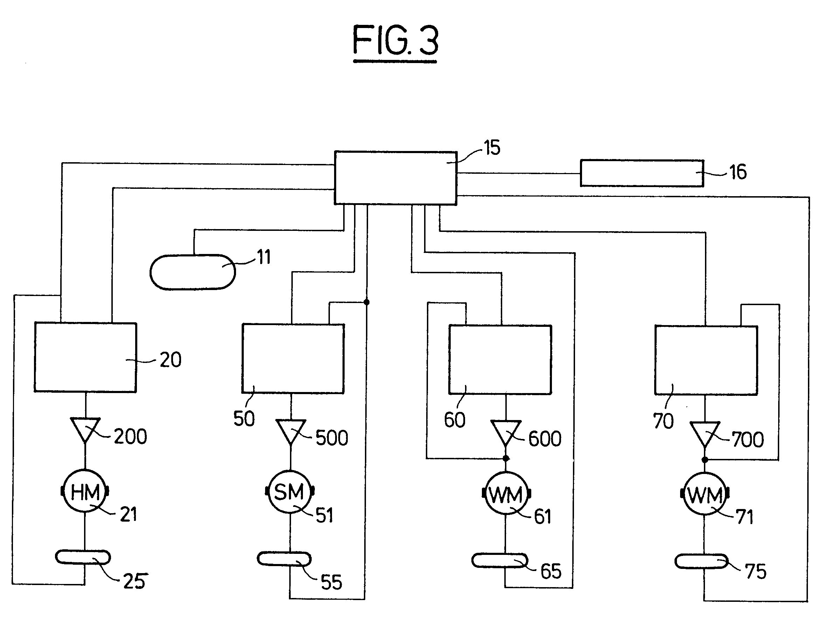

Figur 3 zeigt ein vereinfachtes Blockschaltbild der erfindungsgemäßen Steuer- und Regeleinrichtung für die in den Figuren 1 und 2 dargestellten Filmtransportteile.

Das übergeordnete Steuer-, Regel- und Überwachungssystem 15 ist mit einer Eingabetastatur 16 zur Eingabe gewünschter Filmprojektorfunktionen wie Bildtransport mit variabler Transportgeschwindigkeit, Suchlauf, schneller Vor- und Rücklauf oder dergleichen verbunden. Sie weist vorzugsweise einen Mikroprozessor auf, der mit einem Speicher zur Speicherung beliebiger Funktionen des Filmprojektors verbunden ist.

Das übergeordnete Steuer-, Regel- und Überwachungssystem 15 ist ausgangsseitig mit den elektronischen Steuer- und Regelteilen 20, 50, 60, 70 für die einzelnen Antriebsteile des Filmprojektors verbunden. Die Ausgänge der elektronischen Steuer- und Regelteile 20, 50, 60, 70 sind über nachgeschaltete Gleichstrom-Leistungsverstärker 200, 500, 600, 700 mit dem Hauptmotor 21 der Filmtransporteinrichtung 2, dem Antriebsmotor 51 der Antriebseinrichtung 5 sowie dem linken Wickelmotor 61 und rechten Wickelmotor 71 der beiden Wickeleinrichtungen 6, 7 verbunden.

Die mit den Motorwellen gekoppelten Positions- Abtasteinrichtungen 25 und 55 des Hauptmotors 21 und des Antriebsmotors 51 geben entsprechende Positions-, Drehzahl- und/oder Drehrichtungssignale an die Eingänge der zugeordneten Steuer- und Regelteile 20, 50 sowie an das übergeordnete Steuer-, Regel- und Überwachungssystem ab. Die mit den Motorwellen der Wickelmotoren 61, 71 gekoppelten Winkelgeberscheiben 63, 73 der Positions-Abstasteinrichtungen 65, 75 geben Ausgangssignale ausschließlich an jeweils einen Eingang des übergeordneten Steuer-, Regel- und Überwachungssystems 15 ab.

Zusätzlich werden die Ausgänge der Gleichstrom-Leistungsverstärker 600, 700 an einen Eingang des zugeordneten Steuer- und Regelteils 60, 70 gelegt.

Das von der Schleifenmeßeinrichtung 11 abgegebene Signal wird ebenfalls an einen Eingang des Steuer-, Regel- und Überwachungssystems 15 gelegt.

Nachstehend soll die Funktionsweise der erfingungsgemäßen Steuer- und Regeleinrichtung beim Übergang vom intermittierenden Bildtransport mit jeder möglichen Bilddarstellung auf einen kontinuierlichen Schnellauf und umgekehrt unter Bezugnahme,auf die vorstehend beschriebenen Figuren näher erläutert werden.

Die in der Eingabetastatur eingestellte Bildfrequenz wird durch das übergeordnete Steuer-, Regel- und Überwachungssystem 15 in einen Drehzahl-Sollwert für das Steuer- und Regelteil 50 der Antriebseinrichtung 5 umgesetzt, so daß die Drehzahl des Antriebsmotors 51 proportional zur eingestellten Bildfrequenz geregelt wird. Damit bleiben die in den Filmschleifenkanälen 9, 10 gebildeten und einmal eingestellten Filmschleifen im wesentlichen konstant erhalten. Eine eventuell auftretende Abweichung wird von der Schleifenmeßeinrichtung 11 erfaßt und dem Steuer- und Regelteil 50 ein entsprechendes Signal zugeführt, so daß die Drehzahl des Antriebsmotors 51 je nach Veränderung der im Filmschleifenkanal 9 gemessenen Filmschleife erhöht oder erniedrigt wird.

Alternativ hierzu wird in einer bevorzugten Ausführungsform der Erfindung die Regelung der Drehzahl unmittelbar im übergeordneten Steuer-, Regel- und Überwachungssystem 15 durchgeführt.

Das Antriebsmoment der Wickelmotoren 61, 71 der linken bzw. rechten Wickeleinrichtung 6 bzw. 7 wird so geregelt, daß die Filmspulenfestigkeit annähernd konstant bleibt. Zu diesem Zweck wird der Durchmesser des Filmvorrats auf der linken bzw. rechten Filmspule aus dem Drehzahlverhältnis des betreffenden Wickelmotors 61, 71 zum Antriebsmotor 51 der Antriebseinrichtung 5 bestimmt und das jeweilige Motor-Sollmoment vom übergeordneten Steuer-, Regel- und Überwachungssystem 15 ermittelt und als Sollgröße an die Regelteile 60, 70 weitergegeben. Über den nachgeschalteten Regelverstärker 600, 700 wird der jeweils erforderliche Strom an die Wickelmotoren 61, 71 abgegeben.

Wird an der Eingabetastatur 16 eine von der momentanen Bildfrequenz abweichende Bildfrequenz oder ein Befehl zum Umspulen oder Suchlauf eingegeben, so wird von dem übergeordneten Steuer-, Regel- und Überwachungssystem 15 im Rahmen der folgenden Bildfrequenzumschaltung eine Übergangsphase eingefügt, die ein schnelles, aber kontinuierliches Verändern der Drehzahl des Antriebsmotors 51 der Antriebseinrichtung 5 und damit der Vor- und Nachwickeleinrichtungen 3, 4 bewirkt. Dadurch wird die Möglichkeit geschaffen, auch in den Übergangsphasen eine korrekte Filmspannung an den Filmspulen sicherzustellen.

Bei einer Umschaltung der Projektionsgeschwindigkeit wird ein zusätzliches Moment auf die Wickelmotoren 61, 71 aufgeschaltet, um die notwendige Beschleunigungs- bzw. Verzögerungsenergie aufzubringen und den geforderten Filmzug beizubehalten.

Zur Bildfrequenzumschaltung bei Bildprojektion sowie zum schnellen, kontinuierlichen Vor-, Rück- und Suchlauf wird während der Übergangsphase die Geschwindigkeit bzw. Drehzahl des gemeinsamen Antriebsmotors 51 für die Vor- und Nachwickeleinrichtung 3, 4 kontinuierlich erhöht oder erniedrigt, während die Regelung der Filmschleifen von der Filmtransporteinrichtung 2 bzw. vom Hauptmotor 21 übernommen wird. Diese Umschaltung der Filmschleifenregelung von der Vor- und Nachwickeleinrichtung 3, 4 auf den Hauptmotor 21 wird vom übergeordneten Steuer-, Regel- und Überwachungssystem durchgeführt.

Die Filmschleifenregelung während der Bildfrequenzänderung erfolgt in der Weise, daß je nach Vorzeichen des Signals von der Schleifenmeßeinrichtung 11 Bildtransportschritte eingefügt oder ausgelassen werden. Diese Übergangsphase wird damit beendet, daß der Vor- und Nachwickelantrieb die Drehzahl für die neue Filmgeschwindigkeit erreicht hat. Zu diesem Zeitpunkt wird auch die Filmschleifenregelung wieder an die Vor- und Nachwickeleinrichtung zurückgegeben.

Beim kontinuierlichen Transportbetrieb wird die Filmschleifenregelung bei konstanter Filmgeschwindigkeit im Vor-, Rück- und Suchlauf und in den Übergangsphasen von der Filmtransporteinrichtung 2 bzw. vom Hauptmotor 21 übernommen.

Die Schleifenregelung im kontinuierlichen Transportbetrieb, d.h. während des schnellen Vor-, Rück- und Suchlaufs erfolgt in der Weise, daß der Vorspannung des Hauptmotors 21, die proportional zur Drehzahl der Vor- und Nachwickeleinrichtung 3, 4 ist, eine bestimmte Regelspannung überlagert wird, deren Vorzeichen von der Schleifenmeßeinrichtung 11 bestimmt wird, so daß die in den Filmschleifenkanälen 9, 10 gebildeten Filmschleifen durch Erhöhung bzw. Verringerung der Drehzahl des Hauptmotors 21 der Filmtransporteinrichtung 2 konstant gehalten werden.

Die Umschaltung der Filmschleifenregelung im kontinuierlichen Transportbetrieb wird ebenfalls vom übergeordneten Steuer-, Regel- und Überwachungssystem durchgeführt.

Im kontinuierlichen Transportbetrieb während einer Bildfrequenzumschaltung werden somit die in den Filmschleifenkanälen 9, 10 gebildeten Filmschleifen durch Erhöhung bzw. Verringerung der Drehzahl des Hauptmotors 21 der Filmtransporteinrichtung 2 konstant gehalten.

Zum Umspulen, bzw. schnellen Auffinden von bestimmten Filmstellen ist somit eine sehr komfortable Schnellspuleinrichtung gegeben, mit der es möglich ist, durch Tastendruck an der Eingabetastatur 16 unmittelbar von jeder Bildprojektionsgeschwindigkeit auf Schnellauf, d.h. von schrittweisem Bildtransport sofort auf kontinuierlichen Bildtransport überzugehen und wieder zurück auf die vorgesehene Bildprojektionsfrequenz.

Nachstehend soll die Funktionsweise der erfindungsgemäßen Steuer- und Regeleinrichtung beim oder nach dem Schließen des Filmkanals sowie beim Auslaufstopp unter Bezugnahme auf die vorstehend beschriebenen Figuren näher erläutert werden.

Während oder kurz nach dem Schließen des Filmkanals werden sämtliche mit den Antriebsmotoren verbundene Sensoreinrichtungen abgefragt und daraus die Drehrichtung der Wikkelmotoren ermittelt. Aus der Drehrichtung der Wickelmotoren wird festgestellt, ob ein Innen- oder Außenwickel vorliegt und entsprechend werden die Wickelmotoren geregelt. Über eine entsprechende Vorgabe zugelassener Drehrichtungen kann festgestellt werden, ob einer der Wickelmotoren eine falsche Drehrichtung aufweist, sodaß entweder eine Drehrichtungsumkehr oder ein Stillsetzen der Antriebsmotore erfolgt.

Alternativ dazu kann die Ermittlung der korrekten Wickelrichtung über eine Drehzahlerfassung erfolgen, da ein in der falschen Drehrichtung laufender Antriebsmotor aufgrund der geringen Belastung zu schnell läuft, sodaß bei einer Vorgabe einer maximalen, relativ niedrigen Drehzahl durch das übergeordnete Steuer-, Regel- und Überwachungssystem ein Überschreiten dieser Drehzahl zum Stillsetzen der Antriebsmotoren oder zur Drehrichtungsumkehr des betreffenden Antriebsmotors führt.

In beiden Fällen werden die von den Sensoreinrichtungen abgegebenen Signale an das übergeordnete, mikroprozessorgesteuerte Steuer-, Regel- und Überwachungssystem 15 weitergeleitet, das die erfaßten Signale und die über die Eingabetastatur 16 eingegebenen Steuerbefehle in Relation zueinander bringt und bei unzulässigen Betriebszuständen, beispielsweise bei einem falschen Einlegen eines Films, den Betrieb des Filmprojektors durch Stillsetzen der Antriebsmotore unterbricht.

Die Wickelrichtung wird vorzugsweise während des Schliessens des Filmkanals bzw. während des Schleifenaufbaus erfaßt und daraufhin die Antriebsmotoren für die Wickelteller entsprechend angesteuert, ohne daß die Antriebsmotoren stillgesetzt werden. Die Information über die jeweilige Wickelrichtung wird bis zum nächsten Öffnen des Filmkanals gespeichert.

Der Auslaufstop ist sowohl beim intermittierenden Filmtransport als auch beim kontinuierlichen Filmtransport zum Umspulen oder schnellen Suchlauf wirksam. Durch die von den Sensoreinrichtungen abgegebenen drehzahlproportionalen Signale ist eine Bestimmung des Durchmessers des Filmvorats auf der Auf- und Abwickelspule im Vergleich zur Drehzahl der Vor- und Nachwickeleinrichtungen sehr genau möglich.

Ist der Film vollständig von der Abwickelspule abgewikkelt, so erfolgt ein gesteuertes Stillsetzen der Antriebsmotore in der Weise, daß die Restlänge des im Filmkanal befindlichen Films auf die Aufwickelspule aufgewickelt und daran anschließend sämtliche Antriebsmotore stillgesetzt werden. Da die Abwickelspule so gesteuert wird, daß ein konstanter Filmwickel gegeben ist, wird bei vollständig abgewickeltem Film unverzüglich eine Drehzahldifferenz zwischen dem Wickelmotor der Abwickelspule und dem Antriebsmotor für die Vor- und Nachwickeleinrichtung festgestellt. Ein von dem übergeordneten, mikroprozessorgesteuerten Steuer-, Regel- und Überwachungssystem 15 eingeleiteter dynamischer Bremsvorgang bewirkt, daß der Film vollständig aus dem Filmkanal durch die Aufwickelspule gezogen und nachdem das Filmende den Filmkanal verlassen hat, auch der Aufwickelmotor stillgesetzt wird.

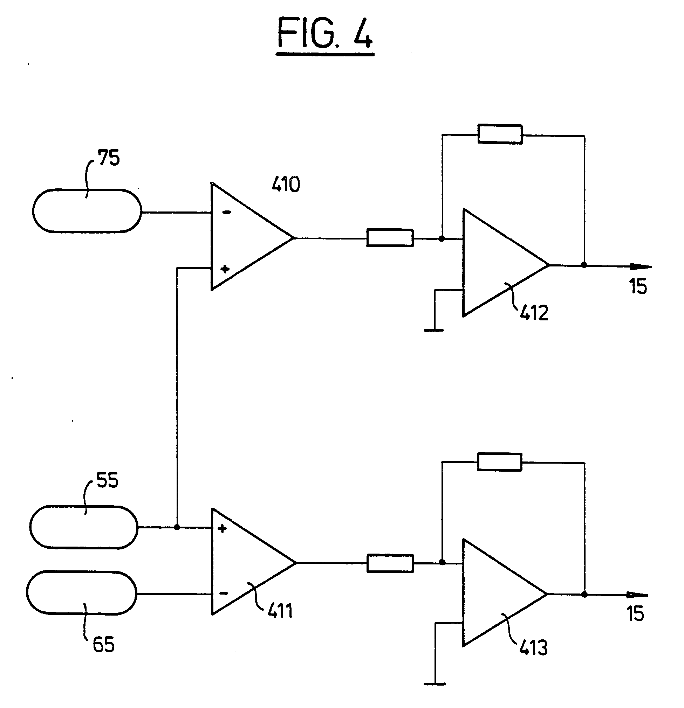

Fig. 4 zeigt ein Ausführungsbeispiel für das Steuerteil zur Bestimmung des Durchmessers des Filmvorats auf der Auf- und Abwickelspule zur Steuerung des Auslaufstopps.

Das Ausgangssignal der Sensoreinrichtung 55 für den Antriebsmotor der Vor- und Nachwickeleinrichtung ist an den positiven Eingang zweier Komperatoren 410, 411 angelegt, deren negativer Eingang mit den Ausgangssignalen der Sensoreinrichtungen 65, 75 für die rechte und linke Wickeleinrichtung beaufschlagt ist. Die Ausgänge der Komperatoren 410, 411 sind an einen Eingang eines Schmitt-Triggers 412, 413 angeschlossen, die zur Einstellung eines vorgebbaren Schwellwertes für die Drehzahldifferenz zwischen dem Antriebsmotor der Vor- und Nachwickeleinrichtungen und den Antriebsmotoren der linken und rechten Wickeleinrichtung dienen.

Die Ausgangssignale der Schmitt-Trigger 412, 413 werden mit Eingängen des übergeordneten, mikroprozessorgesteuerten Betriebs- und Überwachungssystems 15 verbunden, sodaß bei Überschreiten einer vorgebbaren Drehzahldifferenz von dem Betriebs- und Überwachungssystem 15 ein Steuersignal zum Stillsetzen der Antriebsmotore abgegeben wird.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch machen. Insbesondere beschränkt sich die Ausführung nicht auf die Realisierung mit diskreten logischen Baugruppen, sondern läßt sich vorteilhaft auch mit programmierter Logik - vorzugsweise unter Verwendung eines Mikroprozessors - realisieren.

## Patentansprüche

1. Steuer- und Regeleinrichtung für den Filmtransport eines Filmprojektors mit auf beiden Seiten eines Bildfensters (8) angeordneten und von je einem Wickelmotor (61, 71) antreibbaren Wickeltellern (62, 72), jeweils zwischen den Wickeltellern (62, 72) und dem Bildfenster (8) angeordneten Vor- und Nachwickeleinrichtungen (3, 4), die auf beiden Seiten des Bildfensters (8) Filmschleifen erzeugen, einer Filmtransporteinrichtung (2) zwischen den Vor- und Nachwickeleinrichtungen (3, 4), mit einer Schleifenmeßeinrichtung (11), die die zwischen den Vor- und Nachwickeleinrichtungen (3, 4) und dem Bildfenster (8) gebildete Filmschleife erfaßt und ein Signal zur Regelung der Vor- und Nachwickeleinrichtung (3, 4) abgibt, einem Antriebsregler (50) für die Vor- und Nachwickeleinrichtung (3, 4), einem Regler (20) für die Filmtransporteinrichtung (2) und einem die Steuer- und Meßsignale verarbeitenden übergeordneten Steuer-, Regel- und Überwachungssystem (15), das beim intermittierenden Filmtransport, zum schnellen Vor-, Rück- und Suchlauf sowie zur Bildfrequenzumschaltung Stellgrößen an den Regler (20) für die Filmtransporteinrichtung (2) und den Antriebsregler (50) für die Vor- und Nachwickeleinrichtung (3, 4) abgibt,
**dadurch gekennzeichnet,**
daß die Vor- und Nachwickeleinrichtung (3, 4) von nur einem gemeinsamen Antriebsmotor (51) angetrieben werden, dessen Drehzahl vom Antriebsregler (50) für die Vor- und Nachwickeleinrichtung (3, 4) beim intermittierenden Filmtransport proportional zur vorgegebenen Bildfrequenz geregelt wird.

2. Steuer- und Regeleinrichtung nach Anspruch 1, **dadurch gekennzeichnet,** daß zur Bildfrequenzumschaltung bei Bildprojektion während der Übergangsphase der intermittierende Betrieb aufrechterhalten und die Drehzahl des gemeinsamen Antriebsmotors (51) für die Vor- und Nachwickeleinrichtung (3, 4) kontinuierlich erhöht oder erniedrigt und zum schnellen Vor-, Rück- und Suchlauf ein kontinuierlicher Filmtransport durchgeführt wird, wobei während der Übergangsphase die Drehzahl des gemeinsamen Antriebsmotors (51) für die Vor- und Nachwikkeleinrichtung (3, 4) kontinuierlich erhöht oder erniedrigt wird und daß die Filmschleifenregelung sowohl während der Übergangsphase als auch bei konstantem Schnellauf von der Filmtransporteinrichtung (2) durchgeführt wird.

3. Steuer- und Regeleinrichtung nach Anspruch 1 oder 2, **dadurch gekennzeichnet,** daß während der Übergangsphase in Abhängigkeit vom Ausgangssignal der Schleifenmeßeinrichtung (11) blendensynchron Bildschritt-Steuerimpulse hinzugefügt oder ausgelassen werden.

4. Steuer- und Regeleinrichtung nach Anspruch 2 oder 3, **dadurch gekennzeichnet,** daß beim kontinuierlichen Filmtransport an die Filmtransporteinrichtung (2) eine proportional zur Drehzahl der Vor- und Nachwickeleinrichtung (3, 4) verlaufende Vorspannung angelegt und der Vorspannung eine Regelspannung überlagert wird, deren Vorzeichen vom Ausgangssignal der Schleifenmeßeinrichtung (11) abhängt.

5. Steuer- und Regeleinrichtung nach einem der vorangehenden Ansprüche, **dadurch gekennzeichnet,** daß das Antriebsmoment der Wickeltellermotoren (61, 71) so geregelt wird, daß die Filmspulenfestigkeit im gesamten Durchmesserbereich der Filmspulen angenähert konstant bleibt, wobei der jeweilige Filmspulendurchmesser aus dem Verhältnis der Drehzahlen des betreffenden Wickeltellermotors (61, 71) und des gemeinsamen Antriebsmotors (51) für die Vor-und Nachwickeleinrichtung (3, 4) abgeleitet und ein Soll-Drehmoment errechnet wird, das über einen nachgeschalteten Regelverstärker (600, 700) einen zur Erzielung des Soll-Drehmoments erforderlichen Strom an die Wickeltellermotoren (61, 71) abgibt.

6. Steuer- und Regeleinrichtung nach Anspruch 5 , **dadurch gekennzeichnet,** daß zu Beginn einer Geschwindigkeitsveränderung während des kontinuierlichen Filmtransports ein zusätzliches Drehmoment aufgeschaltet wird, um die notwendige Beschleunigungs- bzw. Verzögerungsenergie aufzubringen und die geforderte Filmspannung beizubehalten.

7. Steuer- und Regeleinrichtung nach einem der vorangehenden Ansprüche, **dadurch gekennzeichnet,** daß der Antriebsmotor (21) für die Filmtransporteinrichtung (2) und der gemeinsame Antriebsmotor (51) für die Vor- und Nachwickeleinrichtungen (3, 4) sowie die Wikkeltellermotoren (61, 71) mit jeweils einer Einrichtung zur Drehwinkelerfassung (26, 55, 65, 75) der Motoren verbunden sind, deren Ausgangssignale an die Steuer- und Regeleinrichtung abgegeben werden, wobei zur Regelung der Filmschleife nur eine Schleifenmeßeinrichtung (11) zwischen einer der beiden Vor- und Nachwickeleinrichtungen (3 bzw. 4) und dem Bildfenster (8) vorgesehen ist, während die andere Filmschleife mitgeführt wird.

8. Steuer- und Regeleinrichtung nach einem der vorangehenden Ansprüche, **dadurch gekennzeichnet,** daß die Antriebswellen der Antriebsmotoren (21, 51, 61, 71) mit einer opto-elektronischen oder magnetischen Winkelstellungs-Erfassungseinrichtung (24, 25; 54, 55; 64, 65; 74, 75) verbunden sind, deren die Winkelstellung, Drehzahl und Drehrichtung der Antriebsmotoren (21, 51, 61, 71) angebende Ausgangssignale an einzelne Antriebsregler (20, 50) und an das übergeordnete Steuer-, Regel- und Überwachungssystem (15) abgegeben werden.

9. Steuer- und Regeleinrichtung nach einem der vorangehenden Ansprüche, **dadurch gekennzeichnet,** daß die Regler (20, 50) für die Filmtransporteinrichtung (2) und den gemeinsamen Antriebsmotor (51) für die Vor- und Nachwickeleinrichtungen (3, 4) zusätzlich mit dem Ausgangssignal der Schleifenmeßeinrichtung (11) beaufschlagt werden, wobei die Filmschleifenregelung als übergeordnete Regelgröße den Reglern (20, 50) bzw. dem übergeordneten Steuer-, Regel- und Überwachungssystem (15) zugeführt wird, das eingangsseitig mit einer Eingabetastatur (16) und ausgangsseitig mit Eingängen der Regler (20, 50, 60, 70) für die Antriebsmotoren (21, 51, 61, 71) verbunden ist.

10. Steuer- und Regeleinrichtung nach einem der vorangehenden Ansprüche, **dadurch gekennzeichnet,** daß aus den von den Sensoreinrichtungen (25; 55; 65; 75) abgegebenen Signalen die Wickelrichtung während des Schließens des Filmkanals bzw. während des Schleifenaufbaus erfaßt, bis zum nächsten Öffnen des Filmkanals gespeichert wird, und die Antriebsmotoren (61, 71) für die Wickelteller (62, 72) entsprechend angesteuert werden und daß der Antriebsmotor (51) für die Vor- und Nachwickeleinrichtungen (3, 4) mit einer die Drehzahl erfassenden Sensoreinrichtung (55) verbunden ist, deren Ausgangssignal zusammen mit den Ausgangssignalen der mit den Wickelmotoren (61, 71) verbundenen Sensoreinrichtungen (65, 75) einer Vergleichseinrichtung zugeführt wird, die bei Überschreiten eines vorgebbaren Wertes der Drehzahldifferenz zwischen dem Antriebsmotor (51) der Vor- und Nachwickeleinrichtung (3, 4) und einem der Wickelmotoren (61 bzw. 71) ein Signal an das übergeordnete Steuer-, Regel- und Überwachungssystem (15) abgibt, das sämtliche Antriebsmotoren (21; 51; 61, 71) abbremst.

## Claims

1. Control and regulating device for the film transport of a cine projector with winding discs (62, 72), which are arranged on both sides of a film gate (8) and can be driven by a respective winding motor (61, 71), feed and take-up devices (3, 4), which are in each case arranged between the winding discs (62, 72) and the film gate (8) and which produce film loops on both sides of the film gate (8), a film transport device (2) between the feed and take-up devices (3, 4), a loop measuring device (11), which detects the film loop formed between the feed and take-up devices (3, 4) and the film gate (8) and delivers a signal for regulating the feed and take-up devices (3, 4), a drive regulator (50) for the feed and take-up devices (3, 4), a regulator (20) for the film transport device (2) and a master control, regulating and monitoring system (15), which processes the control and measurement signals and delivers correcting variables to the regulator (20) for the film transport device (2) and the drive regulator (50) for the feed and take-up devices (3, 4) during intermittent film transport, for fast forward and reverse motion and search mode and to change the picture frequency, characterised in that the feed and take-up devices (3, 4) are driven by just one common drive motor (51), the speed of which is regulated by the drive regulator (50) for the feed and take-up devices (3, 4) during intermittent film transport proportionally to the predetermined picture frequency.

2. Control and regulating device according to claim 1, characterised in that the intermittent mode is maintained and the speed of the common drive motor (51) for the feed and take-up devices (3, 4) continuously increased or decreased to change the picture frequency when projecting pictures during the transition phase, and the film transport is continuous for fast forward and reverse motion and search mode, with the speed of the common drive motor (51) for the feed and take-up devices (3, 4) being continuously increased or decreased during the transition phase, and that the film loop regulation is carried out both during the transition phase and during constant fast motion by the film transport device (2).

3. Control and regulating device according to claim 1 or 2, characterised in that picture stepping control pulses which are synchronous with the aperture are added or omitted during the transition phase in accordance with the output signal of the loop measuring device (11).

4. Control and regulating device according to claim 2 or 3, characterised in that during continuous film transport a bias voltage which is proportional to the speed of the feed and take-up devices (3, 4) is applied to the film transport device (2) and a control voltage is superimposed on the bias voltage, the sign of which control voltage depends on the output signal of the loop measuring device (11).

5. Control and regulating device according to one of the preceding claims, characterised in that the driving torque of the winding disc motors (61, 71) is regulated such that the film spool strength remains approximately constant in the entire diametral area of the film spools, with the respective film spool diameter being derived from the ratio of the speeds of the relevant winding disc motor (61, 71) and the common drive motor (51) for the feed and take-up devices (3, 4), and a desired torque being calculated which delivers a current which is necessary to obtain the desired torque to the winding disc motors (61, 71) via a servo amplifier (600, 700), which is arranged downstream.

6. Control and regulating device according to claim 5, characterised in that an additional torque is superimposed at the beginning of a speed variation during continuous film transport in order to apply the necessary acceleration or deceleration energy and maintain the required film tension.

7. Control and regulating device according to one of the preceding claims, characterised in that the drive motor (21) for the film transport device (2), the common drive motor (51) for the feed and take-up devices (3, 4) and the winding disc motors (61, 71) are in each case connected to a device (26, 55, 65, 75) for detecting the angle of rotation of the motors, the output signals of which devices are delivered to the control and regulating device, just one loop measuring device (11) being provided between either the feed device (3) or take-up device (4) and the film gate (5) to regulate the film loop, while the other film loop is carried along.

8. Control and regulating device according to one of the preceding claims, characterised in that the drive shafts of the drive motors (21, 51, 61, 71) are connected to an optoelectronic or magnetic angular position detection device (24, 25; 54, 55; 64, 65; 74, 75), whose output signals which indicate the angular position, speed and direction of rotation of the drive motors (21, 51, 61, 71) are delivered to individual drive regulators (20, 50) and to the master control, regulating and monitoring system (15).

9. Control and regulating device according to one of the preceding claims, characterised in that the regulators (20, 50) for the film transport device (2) and the common drive motor (51) for the feed and take-up devices (3, 4) are additionally acted upon by the output signal of the loop measuring device (11), with the film loop regulation being supplied as an overriding control variable to the regulators (20, 50) or the master control, regulating and monitoring system (15), which is connected on the input side to an input keyboard (16) and on the output side to inputs of the regulators (20, 50, 60, 70) for the drive motors (21, 51, 61, 71).

10. Control and regulating device according to one of the preceding claims, characterised in that the winding direction is detected from the signals delivered by the sensor devices (25; 55; 65; 75) during the closure of the film track or during the loop formation and stored until the film track is next opened, and the drive motors (61, 71) for the winding discs (62, 72) are actuated accordingly, and that the drive motor (51) for the feed and take-up devices (3, 4) is connected to a sensor device (55), which detects the speed and the output signal of which is supplied together with the output signals of the sensor devices (65, 75) connected to the winding motors (61, 71) to a comparator which, when a predeterminable value of the speed difference between the drive motor (51) of the feed and take-up devices (3, 4) and one of the winding motors (61 and 71) is exceeded, delivers a signal to the master control, regulating and monitoring system (15), which brakes all the drive motors (21; 51; 61, 71).

## Revendications

1. Dispositif de commande et de réglage pour l'avancement du film d'un projecteur de film, comportant des plateaux d'enroulement (62, 72) agencés des deux côtés d'une fenêtre d'image (8) et pouvant être entraînés par chaque fois un moteur d'enroulement. (61, 71), des dispositifs d'enroulement antérieur et postérieur (3, 4) qui sont agencés respectivement entre les plateaux d'enroulement (62, 72) et la fenêtre d'image (8) et qui produisent des deux côtés de la fenêtre d'image (8) une boucle de film, un dispositif d'avancement de film (2) entre les dispositifs d'enroulement antérieur et postérieur (3, 4), comportant un dispositif de mesure de boucles (11) qui détecte la boucle de film formée entre les dispositifs d'enroulement antérieur et postérieur (3, 4) et la fenêtre d'image (8) et qui délivre un signal pour le réglage du dispositif d'enroulement antérieur et postérieur (3, 4), un dispositif de réglage d'entraînement (50) pour le dispositif d'enroulement antérieur et postérieur (3, 4), un dispositif de réglage (20) pour le dispositif d'avancement de film (2) et un système principal de commande, de réglage et de surveillance (15) qui traite les signaux de commande et de mesure et qui, lors de l'avancement intermittent du film, pour la marche rapide en avant, en arrière et de recherche ainsi que pour le changement de fréquence d'image, délivre des grandeurs de réglage au dispositif de réglage (20) pour le dispositif d'avancement de film (2) et au dispositif d'entraînement (50) pour le dispositif d'enroulement antérieur et postérieur (3, 4), caractérisé en ce que les dispositifs d'enroulement antérieur et postérieur (3, 4) sont entraînés par seulement un moteur d'entraînement (51) commun dont la vitesse de rotation est réglée proportionnellement à la fréquence d'image donnée au préalable, dans le cas de l'avancement intermittent du film, par le dispositif de réglage d'entraînement (50) du dispositif d'enroulement antérieur et postérieur (3, 4).

2. Dispositif de commande et de réglage suivant la revendication 1, caractérisé en ce que pour le changement de fréquence d'image lors d'une projection d'image, pendant la phase de transition le fonctionnement intermittent est maintenu et la vitesse de rotation du moteur d'entraînement commun (51) du dispositif d'enroulement antérieur et postérieur (3, 4) est augmentée ou diminuée de façon continue et en ce que pour la marche rapide en avant, en arrière et de recherche, un avancement continu du film est réalisé, la vitesse de rotation du moteur d'entraînement commun (51) du dispositif d'enroulement antérieur et postérieur (3, 4) étant augmentée ou diminuée de façon continue pendant la phase de transition, et en ce que le réglage de boucles du film est réalisé tant pendant la phase de transition qu'aussi lors d'une marche rapide constante du dispositif d'avancement de film (2).

3. Dispositif de commande et de réglage suivant la revendication 1 ou 2, caractérisé en ce que pendant la phase de transition, en fonction du signal de sortie du dispositif de mesure de boucles (11), des impulsions de commande pas-à-pas de l'image sont ajoutées ou omises en synchronisme avec l'obturateur.

4. Dispositif de commande et de réglage suivant la revendication 2 ou 3, caractérisé en ce que lors de l'avancement continu du film, au dispositif d'avancement de film (2) est appliquée une tension préalable qui se développe proportionnellement à la vitesse de rotation du dispositif d'enroulement antérieur et postérieur (3, 4) et en ce qu'à la tension préalable est superposée une tension de réglage dont la polarité dépend du signal de sortie du dispositif de mesure de boucles (11).

5. Dispositif de commande et de réglage suivant l'une des revendications précédentes, caractérisé en ce que le couple d'entraînement des moteurs de plateau d'enroulement (61, 71) est réglé de façon que la fermeté des bobines d'enroulement reste approximativement constante dans toute la plage de diamètre des bobines de film, le diamètre de bobines de film respectif étant dérivé du rapport des vitesses de rotation du moteur de plateau d'enroulement (61, 71) en question et du moteur d'entraînement commun (51) du dispositif d'enroulement antérieur et postérieur (3, 4) et en ce qu'est calculé un couple de rotation de consigne qui délivre, par un amplificateur de réglage (600, 700) branché à la suite, aux moteurs de plateau d'enroulement (61, 71) un courant nécessaire pour l'obtention du couple de rotation de consigne.

6. Dispositif de commande et de réglage suivant la revendication 5, caractérisé en ce qu'au début d'une modification de vitesse pendant l'avancement continu du film, un couple de rotation supplémentaire est ajouté afin d'appliquer l'énergie nécessaire d'accélération ou de ralentissement et de conserver la tension de film demandée.

7. Dispositif de commande et de réglage suivant l'une des revendications précédentes, caractérisé en ce que le moteur d'entraînement (21) du dispositif d'avancement de film (2) et le moteur d'entraînement commun (51) des dispositifs d'enroulement antérieur et postérieur (3, 4) ainsi que les moteurs de plateau d'enroulement (61, 71) sont raccordés chaque fois à un dispositif pour la saisie de l'angle de rotation (26, 55, 65, 75) des moteurs, dont le signal de sortie est délivré au dispositif de commande et de réglage, seulement un dispositif de mesure de boucles (11) entre un des deux dispositifs d'enroulement antérieur et postérieur (3 ou respectivement 4) et la fenêtre d'image (8) étant prévu pour le réglage de la boucle de film tandis que l'autre boucle de film est entraînée.

8. Dispositif de commande et de réglage suivant l'une des revendications précédentes, caractérisé en ce que les arbres d'entraînement des moteurs d'entraînement (21, 51, 61, 71) sont reliés à un dispositif de saisie de position angulaire optoélectronique ou magnétique (24, 25; 54, 55; 64, 65; 74, 75) dont les signaux de sortie qui délivrent la position angulaire, la vitesse de rotation et le sens de rotation des moteurs d'entraînement (21, 51, 61, 71) sont délivrés à des dispositifs de réglage d'entraînement séparés (20, 50) et au système principal de commande, de réglage et de surveillance (15).

9. Dispositif de commande et de réglage suivant l'une des revendications précédentes, caractérisé en ce que les dispositifs de réglage (20, 50) du dispositif d'avancement de film (2) et du moteur d'entraînement commun (51) des dispositifs d'enroulement antérieur et postérieur (3, 4) sont alimentés en outre par le signal de sortie du dispositif de mesure de boucles (11), le réglage de boucles du film étant amené en tant que grandeur de réglage principale aux dispositifs de réglage (20, 50) ou bien au système principal de commande, de réglage et de surveillance (15) qui est raccordé du côté de l'entrée à un clavier d'entrée (16) et du côté de la sortie aux entrées des dispositifs de réglage (20, 50, 60, 70) des moteurs d'entraînement (21, 51, 61, 71).

10. Dispositif de commande et de réglage suivant l'une des revendications précédentes, caractérisé en ce que le sens d'enroulement est saisi, pendant la fermeture du canal de film ou bien pendant la constitution des boucles, à partir des signaux délivrés par les dispositifs de détection (25; 55; 65; 75) et il est mémorisé jusqu'à l'ouverture suivante du canal de film, les moteurs d'entrainement (61, 71) pour les plateaux d'enroulement (62, 72) étant commandés de façon correspondante et en ce que le moteur d'entrainement (51) des dispositifs d'enroulement antérieur et postérieur (3, 4) est raccordé à un dispositif de détection (55) qui saisit la vitesse de rotation et dont le signal de sortie est amené, avec les signaux de sortie des dispositifs de détection (65, 75) reliés aux moteurs d'enroulement (61, 71), à un dispositif de comparaison qui délivre, lors d'un dépassement vers le haut d'une valeur donnée au préalable de la différence de vitesses de rotation entre le moteur d'entraînement (51) du dispositif d'enroulement antérieur et postérieur (3, 4) et d'un des moteurs d'enroulement (61 ou bien 71), un signal au système principal de commande, de réglage et de surveillance (15) qui freine l'ensemble des moteurs d'entrainement (21; 51; 61, 71).
